# EUROPEAN PATENT APPLICATION

(11) **EP 1 758 011 A2**
(43) Date of publication of application: **28.02.2007**
(21) Application number: 06017188.1
(22) Date of filing: 17.08.2006
(51) Int. Cl.: G06F 1/16

(54) **Display device capable of receiving an electronic device**

(30) Priority: 23.08.2005 CN 200510092769
(71) Applicant: BenQ Corporation, Gueishan, Tao-Yuan Hsien Taiwan (CN)
(72) Inventor: Hsu, Yu-Ming, Taipei City (TW)
(74) Representative: Görz, Ingo

(57) **Abstract**

A display device (50) includes a display monitor (52) including a first plane (52a) facing a user and a second plane (52b) opposite to the first plane (52a), and a support arm (54) including a first end (54a) connected to the second plane (52b) and a second end (54b). The display device (50) further includes a base (56) positioned below the display monitor (52) for supporting the display monitor (52) on a surface (72). The base (56) includes a first side (56a) facing the user, a second side (56b) opposite to the first side (56a) and connected to the second end (54b) of the support arm (54), and a receiving part (56c) for receiving an electronic device (60) selectively. The electronic device (60) is selectively received in the receiving part (56c) from a bottom (52c) of the first plane (52a) of the display monitor (52).

## Description

The present invention relates to a display device according to the pre-characterizing clause of claim 1.

Generally speaking, desktop computers can be divided into two types. The first type is a traditional computer structure of a separated computer and a display. The second type is an all-in-one computer structure. There are a multitude of transmission lines between the separated computer and the display. It is difficult for users to organize these transmission lines.

This in mind, the present invention aims at providing a display device that economizes space on a desk and organizes cables.

This is achieved by a display device according to claim 1. The dependent claims pertain to corresponding further developments and improvements.

As will be seen more clearly from the detailed description following below, the claimed display device includes a base that has a receiving part for receiving an electronic device selectively.

In the following, the invention is further illustrated by way of example, taking reference to the accompanying drawings. Thereof
Fig.1 is a diagram of a traditional computer system having a separated computer and a display in the prior art,
Fig.2 is a back-view diagram of the traditional computer system shown in Fig.1 in the prior art,
Fig.3 is a perspective drawing of a display device according to the present invention,
Fig.4 is a diagram of the display device receiving an electronic device according to the present invention,
Fig.5 is a back-view diagram of the display device in the Fig.4,
Fig.6 is a diagram of a stuff inserted into an opening according to the present invention,
Fig.7 is a diagram of the stuff with a cable-collecting structure collecting a plurality of cables of an electronic device according to the present invention,
Fig.8 is a diagram of a stuff inserted into the opening according to another embodiment of the present invention, and
Fig.9 is a diagram of a display device according to another embodiment of the present invention.

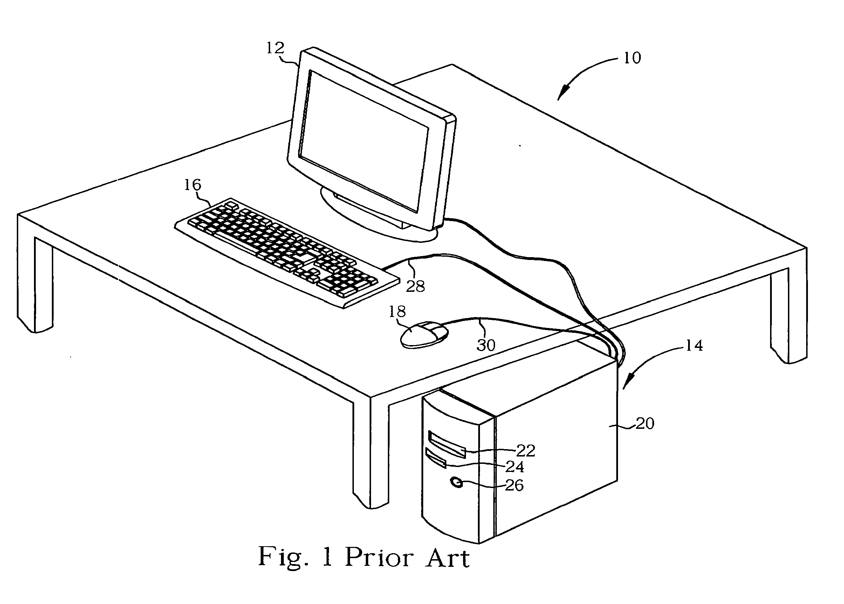

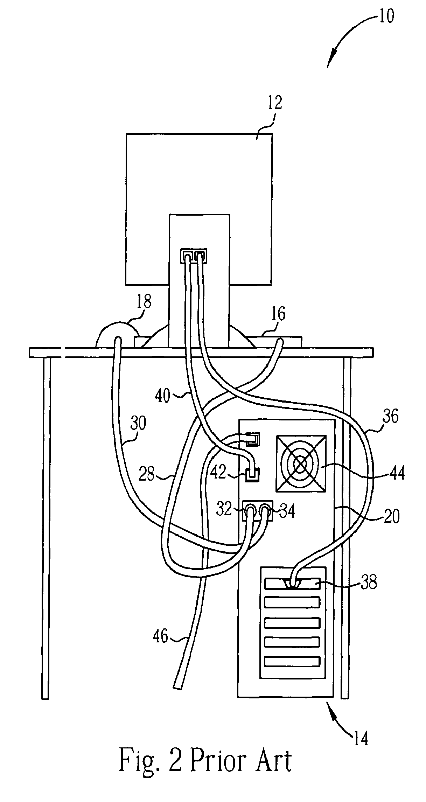

Please refer to Fig.1 and Fig.2. Fig.1 is a diagram of a traditional computer system 10 having a separated computer 14 and a display 12. Fig.2 is a back-view diagram of the traditional computer system 10. The computer system 10 comprises the display 12, the computer 14, a keyboard 16, and a mouse 18. The computer 14 comprises a housing 20 for protecting computer components (for example, a motherboard) inside the housing 20. Furthermore, the housing 20 can be utilized to prevent the computer system 10 from radiating electromagnetic interference (EMI) to the environment. The computer 14 further comprises an optical disk drive 22, a floppy disk drive 24, and a power switch 26 for enabling users to turn on or turn off the computer system 1 0. In addition, the keyboard 16 and the mouse 18 are respectively connected to PS/2 slots 32, 34 on the housing 20 through transmission lines 28, 30. The display 12 is connected to a display card 38 of the computer 14 through a transmission line 36 to transfer image signals. Furthermore, the display 1 2 is connected to a power slot 42 of the computer 14 through another transmission line 40 to receive power transferred by a power supplying device 44 of the computer 14. In addition, the power supplying device 44 of the computer 14 is connected to an external power supplying device through another transmission line 46 to receive power transferred by the external power supplying device so as to provide electricity for operation of the traditional computer system 10.

However, the computer system 10 has a disadvantage. Because the computer system 10 comprises a separated computer 14 and a display 12, the computer 14 and the display 12 are placed at different locations. For example, the display 12 is placed on a table, but the computer 14 is placed under the table. Therefore, the user is inconvenienced when utilizing the optical disk drive 24 or the floppy disk drive 26, or when switching the power switch 26. Furthermore, because there are a multitude of transmission lines between the computer 14 and display 12, it is difficult for users to organize these transmission lines.

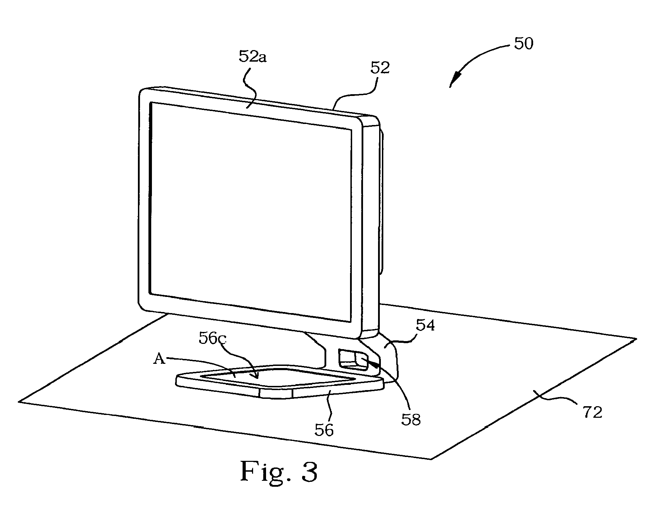

Please refer to Fig.3. Fig.3 is a perspective drawing of a display device 50 according to the present invention. The display device 50 includes a display monitor 52, which can be an LCD monitor, a support arm 54 connected to the display monitor 52, and a base 56 connected to the support arm 54 for receiving an electronic device selectively. The support arm 54 includes an opening 58. When the electronic device is selectively received in the base 56, a cable of the electronic device can pass through the opening 58 of the support arm 54.

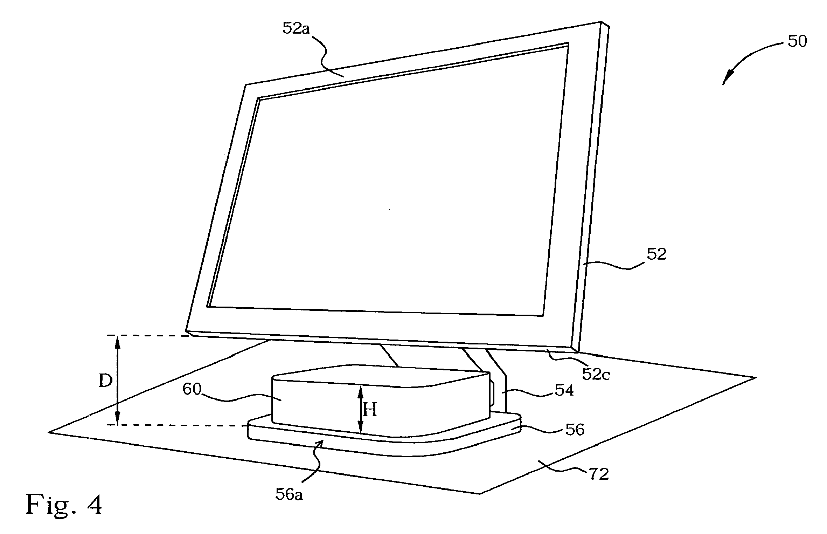

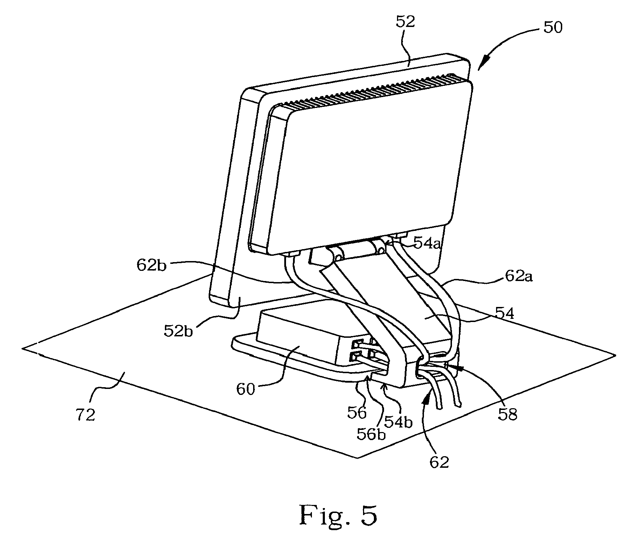

Please refer to Fig.4 and Fig.5. Fig.4 is a diagram of the display device 50 receiving an electronic device 60 according to the present invention. Fig.5 is a back-view diagram of the display device 50 in Fig.4. The display monitor 52 includes a first plane 52a facing a user and a second plane 52b opposite to the first plane 52a. The support arm 54 includes a first end 54a connected to the second plane 52b of the display monitor 52 and a second end 54b. The base 56 is positioned below the display monitor 52 for supporting the display monitor 52 on a surface 72. The base 56 includes a first side 56a facing the user, a second side 56b opposite to the first side 56a and connected to the second end 54b of the support arm 54, and a receiving part 56c for receiving the electronic device 60 selectively. The electronic device 60 can be selectively received in the receiving part 56c from a bottom 52c of the first plane 52a of the display monitor 52. The receiving part 56c can be a sunken part. The electronic device 60 can be an all-in-one computer, an external hard drive, an external optical disk drive, or other peripheral devices. A distance D between the bottom 52c of the first plane 52a of the display monitor 52 and the base 56 is greater than a height H of the electronic device 60. A first area A of the receiving part 56c is substantially equal to a second area of the electronic device 60 connecting the receiving part 56c. A plurality of first cables 62 of the electronic device 60 can pass through the opening 58 of the support arm 54 so as to be arranged in an orderly manner. The display device 50 can receive signals and electricity from the electronic device 60 through the cables 62a, 62b. When the electronic device 60 is received on the receiving part 56c of the base 56, the first cables 62 of the electronic device 60 can pass through the opening 58 to be distant from the first plane 52a of the display monitor 52 so as to prevent the first cables 62 from becoming disorganized on the surface 72.

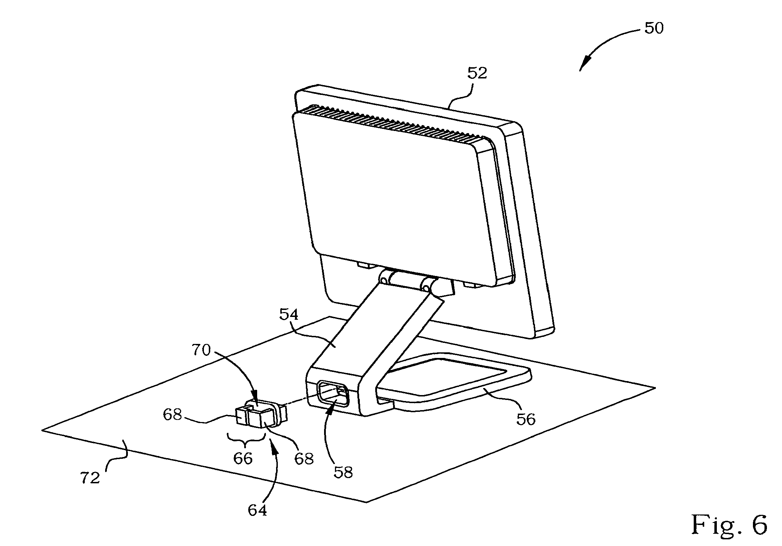

Please refer to Fig.6. Fig.6 is a diagram of a stuff 64 inserted into the opening 58 according to the present invention. The display device further includes the stuff 64 for selectively inserting into the opening 58 of the support arm 54. The stuff 64 includes a cable-collecting structure 66 for receiving cables, and the cable-collecting structure 66 includes two L-shaped shelves 68. A hollow space 70 is formed by the two L-shaped shelves 68 so that the cables can be collected inside the hollow space 70 by the two L-shaped shelves 68.

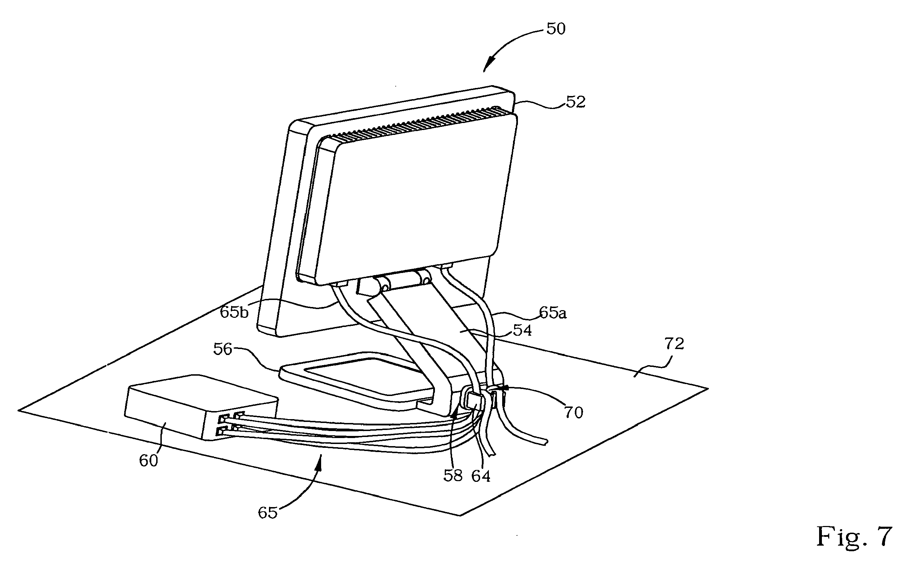

Please refer to Fig.7. Fig.7 is a diagram of the stuff 64 holding a plurality of second cables 65 of the electronic device 60 according to the present invention. When the electronic device 60 is not positioned on the base 56 of the display device 50, a user can insert the stuff 64 into the opening 58 selectively. The cables 65a, 65b connected to the display monitor 52 can pass through the hollow space 70 of the stuff 64 so as to prevent the cables from becoming disorganized at the rear of the display device 50.

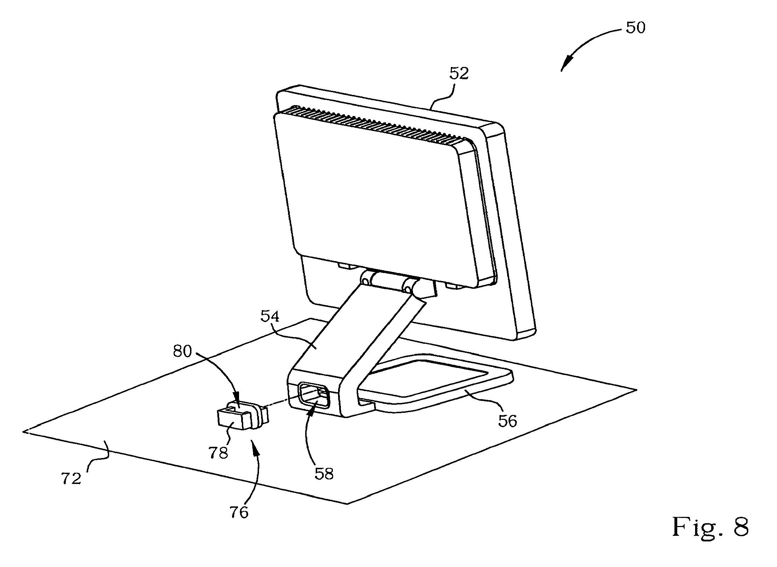

Please refer to Fig.8. Fig.8 is a diagram of a stuff 76 inserted into the opening 58 according to another embodiment of the present invention. The stuff 76 is inserted into the opening 58 of the support arm 54 selectively. The stuff 76 includes a cable-collecting structure 78 for receiving cables, and the cable-collecting structure 78 is a C-shaped structure. A hollow space 80 is formed by the C-shaped structure so that the cables can be collected inside the hollow space 80. The usage of the stuff 76 is essentially the same as the above-mentioned embodiment, thus a further description is hereby omitted.

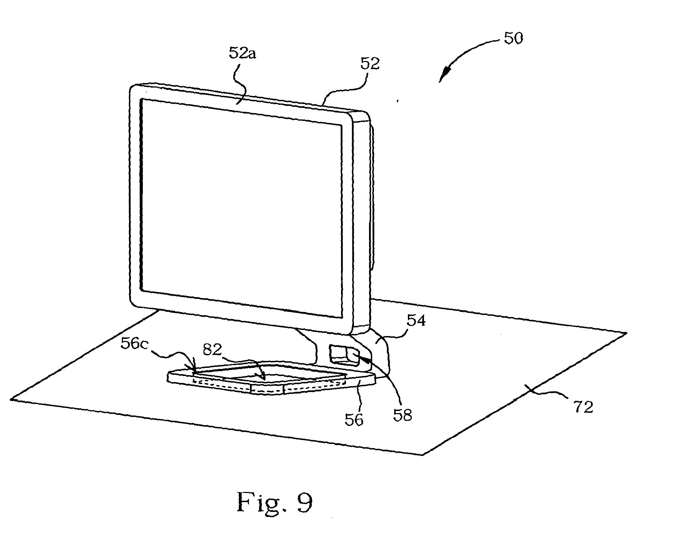

Please refer to Fig.9. Fig.9 is a diagram of a display device 50 according to another embodiment of the present invention. In this embodiment, the receiving part 56c includes an opening 82 for containing the electronic device 60. The other structure of the display device 50 of this embodiment is the same as the above-mentioned embodiment.

In contrast with the conventional display device, the base of the display device according to the present invention can selectively receive an electronic device so as to overcome the disadvantage of a separated computer and display monitor. The present invention can economize space on a desk when positioning the electronic device on the base. Furthermore, cables of the electronic device can pass through an opening of a support arm of the display device so as to organize the cables. When the electronic device is not positioned on the base of the display device, the stuff can be inserted into the opening of the support arm for collecting and organizing the cables connected to the display device.

## Claims

1. A display device (50) comprising:
a display monitor (52) comprising a first plane (52a) facing a user and a second plane (52b) opposite to the first plane (52a);
a support arm (54) comprising a first end (54a) connected to the second plane (52b) and a second end (54b); and
**characterized by**:
a base (56) positioned below the display monitor (52) for supporting the display monitor (52) on a surface (72), the base (56) comprising:
a first side (56a) facing the user;
a second side (56b) opposite to the first side (56a) and connected to the second end (54b) of the support arm (54); and
a receiving part (56c) for receiving an electronic device (60) selectively;
wherein the electronic device (60) is selectively received in the receiving part (56c) from a bottom (52c) of the first plane (52a) of the display monitor (52).

2. The display device (50) of claim 1, **characterized in that** a distance between the bottom (52c) of the first plane (52a) and the base (56) is greater than a height of the electronic device (60).

3. The display device (50) of claim 2, **characterized in that** the support arm (54) further comprises an opening (58) and when the electronic device (60) is selectively received in the receiving part (56c), a first cable (62) of the electronic device (60) passes through the opening (58) to be distant from the first plane (52a) of the display monitor (52).

4. The display device (50) of claim 3, **characterized in that** the display device (50) further comprises a stuff (64) for selectively inserting into the opening (58) of the support arm (54) when the electronic device (60) is selectively positioned outside the receiving part (56c).

5. The display device (50) of claim 4, **characterized in that** the stuff (64) comprises a cable-collecting structure (66, 78) for partly receiving a second cable (65) of the display monitor (52) when the stuff (64) is selectively inserted into the opening (58) of the support arm (54).

6. The display device (50) of claim 5, **characterized in that** the cable-collecting structure (66) comprises two L-shaped shelves (68).

7. The display device (50) of claim 5, **characterized in that** the cable-collecting structure (78) is a C-shaped structure.

8. The display device (50) of claim 1, **characterized in that** a first area of the receiving part (56c) is substantially equal to a second area of the electronic device (60).

9. The display device (50) of claim 1, **characterized in that** the receiving part (56c) is a sunken part.

10. The display device (50) of claim 1, **characterized in that** the receiving part (56c) comprises an opening (82) for containing the electronic device (60).

11. The display device (50) of claim 1, **characterized in that** the electronic device (60) is a computer.

12. The display device (50) of claim 1, **characterized in that** the electronic device (60) is an external optical disk drive.
